# EUROPEAN PATENT APPLICATION

(11) **EP 3 929 833 A1**
(43) Date of publication of application: **29.12.2021**
(21) Application number: 20382564.1
(22) Date of filing: 26.06.2020
(51) Int. Cl.: G06Q 10/04

(54) **A METHOD AND AN APPARATUS FOR COMPUTER-IMPLEMENTED PREDICTION OF POWER PRODUCTION OF ONE OR MORE WIND TURBINES IN A WIND FARM**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: Aspacher, Karl-Georg

(57) **Abstract**

The invention relates to a method for computer-implemented prediction of power production of one or more wind turbines in a wind farm, wherein during the operation of the wind farm the following steps are performed: obtaining first weather forecast data (WF1) for a given first time period (WIN_H), the first weather forecast data (WF1) being historical weather forecast data for the area of the wind farm; obtaining first power production data (PP1) of the wind farm for the given first time period (WIN_H), the first power production data (PP1) being historical power production data of the wind warm resulting from then actual environmental conditions in the area of the wind farm; obtaining second weather forecast data (WF2) for a given second time period (WIN_P), the second weather forecast data (WF2) being future weather forecast data for the area of the wind farm; determining second power production data (PP2) of the wind farm for the second time period (WIN_P) by processing the first weather forecast data (WF1), the first power production data (PP1) and the second weather forecast data (WF2) by a trained data driven model (MO), where the first weather forecast data (WF1), the first power production data (PP1) and the second weather forecast data (WF2) are fed as a digital input to the trained data driven model (MO) and the trained data driven model (MO) provides the second power production data (PP2) as a digital output, the second power production data (PP2) being a prediction of power production of the wind farm for the second time period (WIN_P).

## Description

A method and an apparatus for computer-implemented prediction of power production of one or more wind turbines in a wind farm

The invention relates to a method and an apparatus for computer-implemented prediction of power production of one or more wind turbines in a wind farm.

Wind turbines of wind farms can cause grid instability because of the stochastic nature of the wind power generation. The risk of grid instability can be reduced by predicting the wind power production of the wind farm. To do so, statistical methods such as polynomial regression, autoregressive moving average (ARMA) and autoregressive integrated moving average (ARIMA) have been extensively used for wind power production predictions. Recently, machine learning techniques, such as artificial neural networks, started to be widely used in time series forecasting. These models are relatively lightweight after being trained and fast to be used in real-time prediction applications. However, up to now these used techniques are not reliable as their prediction is subject to significant variances such that grid instability still can be caused.

It is an object of the present invention to provide an easy method in order to predict power production of one or more wind turbines in a wind farm.

This object is solved by the independent claims. Preferred embodiments of the invention are defined in the dependent claims.

The invention provides a method for computer-implemented prediction of power production of one or more wind turbines in a wind farm. The wind farm comprises at least one wind turbine. In case of a plurality of wind turbines, the number of wind turbines may be arbitrary.

According to the method of the invention, the following steps are performed at each time point of one or more time points during the operation of the wind farm.

In a step i), first weather forecast data for a given first time period are obtained. In the following, the term "first weather forecast data" refers to digital data. The term "obtaining first weather forecast data" means that the first weather forecast data are received by a processor implementing the method of the invention. The first weather forecast data are historical forecast data for the area of the wind farm being generated in the past by a weather forecast provider.

In a step ii), first power production data of the wind farm for the first given time period are obtained. In the following, the term "first power production data" refers to digital data. The term "obtaining first power production data" means that the first power production data are received by the processor implementing the method of the invention. The first power production data are historical power production data of the wind farm resulting from then actual or real environmental conditions in the area of the wind farm.

The first weather forecast data as well as the first power production data are available from one or more data sources, such as a database of the weather forecast provider and a further database storing operational data of the one or more wind turbines of the wind farm. As the first weather forecast data and the first power production data relate to the same first time period, they are correlated to each other.

In a step iii), second weather forecast data for a given second time period are obtained. Again, in the following, the term "second weather forecast data" refers to digital weather forecast data. The term "obtaining second weather forecast data" means that the second weather forecast data are received by the processor implementing the method of the invention. The second weather forecast data are future weather forecast data for the area of the wind farm. The second weather forecast data have been generated by the weather forecast provider in the past or at the time the method of the invention is performed.

In step iv), second power production data of the wind farm are determined for the second time period by processing the first weather forecast data, the first power production data and the second weather forecast data by a trained data driven model, where the first weather forecast data, the first power production data and the second weather forecast data are fed as a digital input to the trained data driven model and where the trained data driven model provides the second power production data as a digital output. The second power production data are a prediction of power production of the wind farm for the second time period.

The method of the invention provides an easy and straight forward method for determining a prediction of power production based on historical power production data and future weather forecast data. To do so, a trained data driven model is used. This model is trained by training data comprising a plurality of historical weather forecast data and historical power production data for a given first time period in the past, weather forecast data for a second time period in the past together with the information about second power production data for the second time window. It is to be noted that the second time window is in the future relative to the first time window and period, respectively.

Any known data driven model being learnt by machine learning may be used in the method according to the invention. In a particularly preferred embodiment, the trained data driven model is a neural network, preferably a recurrent neural network. The recurrent neural network may be preferably a Long Short Term-Memory (LSTM) or a Gated Recurrent Unit (GRU). Nevertheless, other trained data driven models may also be implemented in the method of the invention.

In a preferred embodiment of the invention, the first time period is a past time period, immediately preceding the second time period being a future time period. As a result, the weather forecast data used as input data may be provided in the form of an array consisting of the first weather forecast data and the second weather forecast data. The total weather forecast data consists of an array of time stamps for both the first and the second weather forecast data. As will be described later, the array will be extended by the first power production data and dummy second power production data, the latter set to zero.

In a further preferred embodiment, the first weather forecast data, the first power production data and the second weather forecast data are obtained with the same time granularity. For example, the time granularity may be chosen to one hour, 30 minutes, 15 minutes, ten minutes or five minutes or a few seconds. The first weather forecast data, the first power production data and the second weather forecast data are time series data for the same time period.

In a further preferred embodiment, the first weather forecast data and the second weather forecast data each comprise at least one weather information, selected from a wind speed from different heights, a wind direction, a temperature, and an air density, where the at least one weather information is an average value over a predetermined time period. As noted above, the predetermined time period may be chosen to, for example, one hour, 30 minutes, 15 minutes, ten minutes, five minutes or a few seconds and so on. It is preferred that the first and the second weather forecast data comprise the same amount and the same piece of weather information.

According to a further preferred embodiment, the first power production data and the second power production data each comprise at least one power output information, selected from an electric generated power, and an operation parameter of the wind turbine, such as a wind turbine yaw position, the at least one power output information being an average value over the predetermined time period. It is preferred that the first power production data and the second power production data comprise the same amount and piece of power output information. The predetermined time period corresponds to the predetermined time period for the first and the second weather forecast data.

In a further preferred embodiment, an information based on the second power production data (i.e., based on the digital output of the data driven model) is output via a user interface. E.g., the second power production data itself may be output via the user interface. Alternatively or additionally, a warning may be provided via the user interface in case that the values of predicted power can cause grid instability during the second time period. Thus, a human operator regulating the electrical grid is informed about a significant variation in upcoming power production so that he can initiate appropriate actions to balance the generation and demand of the grid. Preferably, the user interface comprises a visual user interface but it may also comprise a user interface of another type (e.g. an acoustic user interface).

Besides the above method, the invention refers to an apparatus for computer-implemented prediction of power production of one or more wind turbines in a wind farm, where the apparatus is configured to perform the method according to the invention or one or more preferred embodiments according to the invention.

In addition, the invention refers to a wind farm comprising at least one wind turbine, wherein the wind farm comprises an apparatus according to the invention.

Moreover, the invention refers to a computer program product with a program code, which is stored on a non-transitory machine readable carrier, adapted for carrying out the method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the invention will now be described in detail with respect to the accompanying drawings.
- Fig. 1: shows a schematic illustration of a processor for performing an embodiment of the invention; and
- Fig. 2: shows a power production-time-diagram illustrating a comparison of measured power production values and predicted power production values according to the method of the invention.

The method as described in the following provides an easy and straightforward method to predict the power production of one or more wind turbines in a not illustrated wind farm. To do so, first weather forecast data WF1 and first power production data PP1 are obtained from a respective database (not shown). The first weather forecast data WF1 and the first power production data PP1 are obtained for a given first time period WIN_H which is a past time period. Hence, the first weather forecast data WF1 are historical weather forecast data for the wind farm. The first weather forecast data WF1 have been generated in the past by a weather forecast provider and stored in a database, for example, of the weather forecast provider. Similarly, the first power production data PP1 are historical power production data of the wind farm re-suiting from the then actual or real environmental conditions in the area of the wind farm within the first time period WIN_H. As the first weather forecast data WF1 and the first power production data PP1 relate to the same first time period WIN_H, they are correlated to each other.

The first or historical weather forecast data WF1 and the first or historical power production data PP1 are selected within the same time granularity, e.g. for every hour, for a 30 minutes time interval, for a 15 minutes time interval, for a ten minutes time interval, for a five minutes time interval, or for an interval of a few seconds. The time interval may be chosen arbitrarily.

The first weather forecast data WF1 comprise at least one weather information. The weather information may consist of one or more wind speeds from different heights (in particular at hub height, above hub and below hub), a wind direction, a temperature, and an air density. The above mentioned list of weather information is not conclusive and may consist of any further weather information. The at least one weather information is preferably an average value over the predetermined time period, such as mentioned above, an average for every hour, an average for 30 minutes, an average for 15 minutes, or an average of a few seconds and so on.

Similarly, the first or historical power production data PP1 comprises at least one power output information. The at least one output information may be selected from an electric generated power, and an operation parameter of the wind turbine, such as a wind turbine yaw position. However, it is to be understood, that any further power output information may be used as well. The at least one power output information is preferably an average value over the selected predetermined time period.

According to the size of the first time period WIN_H, time series data of historical wind farm data (i.e. power production data) and weather forecast data for the same time period are provided. For example, if the predetermined time period for averaging weather information and power production information is set to 15 minutes, the first time period WIN_H may be chosen to 24 hours, resulting in 96 time series data with weather/power production information (24 hours ^{∗} 4 averaged weather/power production information per hour = 96). The first time period WIN_H can be set from seconds to several days.

This combined data of the first time window WIN H which can be referred to as a historical time window, consisting of the first weather forecast data WF1 and the first power production data PP1 is used as one digital input of a trained data driven model MO. In addition, the trained data driven model MO receives second weather forecast data WF2 for a given second time period WIN_P, also referred to as a future time window. The second time period WIN_P is a future time period. The first time period WIN_H and the second time period WIN_P are chosen such that the first time period WIN_H is immediately preceding the second time period WIN_P. Hence, the second weather forecast data WF2 for the second time period WIN_P are future weather forecast data for the area of the wind farm. They have been generated by the weather forecast provider in the past or at the time of executing the method according to the invention.

The respective historical data (first weather forecast data WF1 and first power production data PP1) and the second weather forecast data WF2 are transferred by a suitable communication link to a processor PR of the wind farm. The processor PR implements the trained data driven model MO receiving the first or historical weather forecast data WF1, the first or historical power production data PP1, and the future weather forecast data WF2 as its digital input and provides a predicted power production of the wind farm (second power production PP2) as a digital output for the second or future time period WIN_P.

The first time period or historical time window WIN_H and the second time period or future time window WIN_P may have the same length. However, they may be of different length. Preferably, the first time window WIN_H is longer then the second time window WIN_P. The second time period WIN_P or prediction time window may last from seconds to several days.

In the embodiment described herein, the trained data driven model MO is based on a recurrent neural network having been learned beforehand by training data. The training data comprise a plurality of first weather forecast data WF1 and first power production data PP1 for a plurality of given first time periods, second weather forecast data WF2 for the same plurality of second time periods WIN_P together with second power production data PP2 of the wind farm for the second time period WIN_P. During the neural network training, the predicted power production PP2 in the second time period WIN_P is compared with real power production available in the training data set of historical data and the neural network parameters are tuned by minimizing the difference between the predicted and the real production values.

Preferably, a Long Short Term-Memory (LSTM) or a Gated Recurrent Unit (GRU) may be used as data driven models. Both of them are well known from the prior art and are particularly suitable for processing time series data.

The second power production PP2 produced as an output of the trained data driven model MO may result as an output on a user interface (not shown). Preferably, the user interface comprises a display. The user interface provides information for a human operator. The output based on the predicted power production PP2 for the second time period WIN_P may be the predicted power production itself so that the operator is informed about a potential upcoming grid instability. Alternatively or additionally, the output may be a warning in case that the predicted power production PP2 may cause a grid instability. The second power production data PP2 which corresponds to the prediction of power production in the second time period WIN_P may also result in control commands. They may be provided to at least one of the wind turbines of the wind farm in order to control or adjust their operation.

As noted above, the trained neural network MO may be based on LSTM which is suitable for processing time series measurements. For example, time series measurements of 1 hour with Nₕᵢₛₜ as the first time period WIN_H (historical window) and N_{pred} as second time period WIN_P (prediction window) are provided. For example, Nₕᵢₛₜ equals to 24 hours and N_{pred} equals to 8 hours. However, the length of the windows WIN_H, WIN_P may be chosen differently. The weather forecast data array consists of Nₜₒₜ = Nₕᵢₛₜ + N_{pred} time stamps for both the historical and the prediction windows, i.e. the first and the second time periods WIN_H, WIN_P. The weather forecast data array of Nₜₒₜ consists of at least one weather information, selected from a wind speed from different heights, a wind direction, a temperature, and an air density, and is used as input together the first power production array of Nₕᵢₛₜ time stamps. As data for the power is only available for the first time period WIN_H, but not for the second time period WIN_P, the two arrays for weather forecast data and power production have different dimensions. To enable the neural network to process them, both arrays, i.e. the weather forecast data WF1, WF2, and the power prediction data, i.e. PP1, should have the same dimension. Therefore, the power production array is extended to Nₜₒₜ with the last N_{pred} values set to zeros in order to ensure no influence on the network model training. The output of the data driven model MO is an array of N_{pred} time stamps with power prediction values. For the model training, the well known TENSOR flow framework with a KERAS application interface may be used.

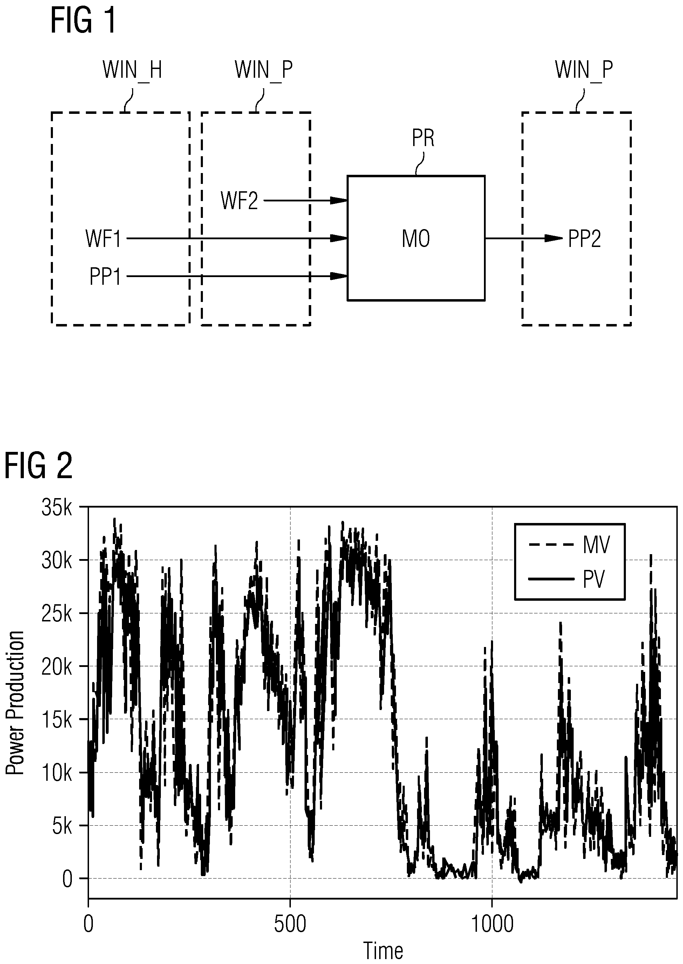

Fig. 2 shows a comparison of predicted power production PV with measured power production MV for the first hour in the prediction window (i.e. the second time period). In Fig. 2, measured values are depicted with MV (dashed line) and predicted values are depicted with PV (solid line). As can be seen from Fig. 2, the data driven model MO is able to describe the time dependence fairly well.

The invention as described in the foregoing has several advantages.

Weather forecast and historical wind turbine data can be used for power predictions. Advanced weather forecast data can be used together with stored wind turbine data. The method as described above implicitly takes into account time dependence of the input data for the power prediction model, by weighting older data less than historical data being close to the present time (the beginning of the future time window).

Weather forecast and historical wind farm data are combined in order to provide input information to a data driven model. The use of combined information allows to improve accuracy of power predictions. The input data is provided for both historical and prediction time windows. The data driven model using time dependence, such as LSTM models, in principal takes into account time dependence of weather forecast and historical wind turbine data.

A precise power production can be used in wind farm control algorithms and energy storage system optimizations, power plant operational planning and power trading.

## Claims

1. A method for computer-implemented prediction of power production of one or more wind turbines in a wind farm, wherein at each time point of one or more time points during the operation of the wind farm the following steps are performed:
i) obtaining first weather forecast data (WF1) for a given first time period (WIN_H), the first weather forecast data (WF1) being historical weather forecast data for the area of the wind farm being generated in the past by a weather forecast provider;
ii) obtaining first power production data (PP1) of the wind farm for the given first time period (WIN_H), the first power production data (PP1) being historical power production data of the wind warm resulting from then actual environmental conditions in the area of the wind farm;
iii) obtaining second weather forecast data (WF2) for a given second time period (WIN_P), the second weather forecast data (WF2) being future weather forecast data for the area of the wind farm being generated in the past by the weather forecast provider;
iv) determining second power production data (PP2) of the wind farm for the second time period (WIN_P) by processing the first weather forecast data (WF1), the first power production data (PP1) and the second weather forecast data (WF2) by a trained data driven model (MO), where the first weather forecast data (WF1), the first power production data (PP1) and the second weather forecast data (WF2) are fed as a digital input to the trained data driven model (MO) and the trained data driven model (MO) provides the second power production data (PP2) as a digital output, the second power production data (PP2) being a prediction of power production of the wind farm for the second time period (WIN_P).

2. The method according to claim 1, wherein the trained data driven model (MO) is a recurrent neural network, preferably a Long Short Term-Memory or a Gated Recurrent Unit.

3. The method according to claim 1 or 2, wherein the first time period (WIN_H) is a past time period, immediately preceding the second time period (WIN_P) being a future time period.

4. The method according to one of the preceding claims, wherein the first weather forecast data (WF1), the first power production data (PP1) and the second weather forecast data (WF2) are obtained with the same time granularity.

5. The method according to one of the preceding claims, wherein the first weather forecast data (WF1) and the second weather forecast data (WF2) each comprise at least one weather information, selected from a wind speed from different heights, a wind direction, a temperature, and an air density, the at least one weather information being an average value over a predetermined time period.

6. The method according to one of the preceding claims, wherein the first power production data (PP1) and the second power production data (PP2) each comprise at least one power output information, selected from an electric generated power, and an operation parameter of the wind turbine, the at least one power output information being an average value over the predetermined time period.

7. The method according to one of the preceding claims, wherein an information based on the second power production data (PP2) is output via a user interface (UI).

8. An apparatus for computer-implemented prediction of power production of one or more wind turbines in a wind farm, wherein the apparatus comprises a processor (PR) configured to perform at each time point of one or more time points during the operation of the wind farm the following steps are performed:
i) obtaining first weather forecast data (WF1) for a given first time period (WIN_H), the first weather forecast data (WF1) being historical weather forecast data for the area of the wind farm being generated in the past by a weather forecast provider;
ii) obtaining first power production data (PP1) of the wind farm for the given first time period (WIN_H), the first power production data (PP1) being historical power production data of the wind warm resulting from then actual environmental conditions in the area of the wind farm;
iii) obtaining second weather forecast data (WF2) for a given second time period (WIN_P), the second weather forecast data (WF2) being future weather forecast data for the area of the wind farm being generated in the past by the weather forecast provider;
iv) determining second power production data (PP2) of the wind farm for the second time period (WIN_P) by processing the first weather forecast data (WF1), the first power production data (PP1) and the second weather forecast data (WF2) by a trained data driven model (MO), where the first weather forecast data (WF1), the first power production data (PP1) and the second weather forecast data (WF2) are fed as a digital input to the trained data driven model (MO) and the trained data driven model (MO) provides the second power production data (PP2) as a digital output, the second power production data (PP2) being a prediction of power production of the wind farm for the second time period (WIN_P).

9. The apparatus according to claim 8, wherein the apparatus is configured to perform a method according to one of claims 2 to 7.

10. A wind farm comprising at least one wind turbine, wherein the wind farm comprises an apparatus according to claim 8 or 9.

11. A computer program product with program code, which is stored on a non-transitory machine-readable carrier, for carrying out a method according to one of claims 1 to 7 when the program code is executed on a computer.

12. A computer program with program code for carrying out a method according to one of claims 1 to 7 when the program code is executed on a computer.
